# EUROPEAN PATENT APPLICATION

(11) **EP 2 525 365 A1**
(43) Date of publication of application: **21.11.2012**
(21) Application number: 11305622.0
(22) Date of filing: 20.05.2011
(51) Int. Cl.: G21C 3/332, G21C 3/34

(54) **Nuclear fuel assembly for boiling water reactor comprising a fuel channel spacer**

(71) Applicant: Areva NP, 92400 Courbevoie (FR)
(72) Inventor: Blavius, Dirk, 91058 Erlangen (DE); Friedrich, Erhard, 90542 Eckental (DE); Block, Bernd, 91054 Erlangen (DE); Ruder, Viktor, 90765 Fürth (DE); Long, Corey, Richland, WA 99352 (US); Walker, Michael, Pasco, WA 99301 (US)
(74) Representative: Domenego, Bertrand

(57) **Abstract**

The nuclear fuel assembly (2) for boiling water reactor comprises a base (4), a head (6), a bundle of fuel rods (8) extending longitudinally between the base (4) and the head (6), a tubular fuel channel (14) encasing the bundle of fuel rods (8), and at least one fuel channel spacer (22) for transversely spacing the fuel assembly (2) from an adjacent element.
According to one aspect of the invention, the or each fuel channel spacer (22) comprises a support (34) having at least one plate (38) and at least one corresponding leaf spring (36) supported by the corresponding plate (38), the or each plate (38) being fixed to a corresponding sidewall (26) of the fuel channel (14).

## Description

The present invention relates to a nuclear fuel assembly for boiling water reactor comprising a base, a head, a bundle of fuel rods extending longitudinally between the base and the head, a tubular fuel channel encasing the bundle of fuel rods, and at least one fuel channel spacer for transversely spacing the fuel assembly from an adjacent element.

In a boiling water reactor (BWR in the following description), fuel assemblies are arranged side-by-side in 2x2 arrays of fuel assemblies. The upper ends of the fuel assemblies are received in a cell of the reactor upper core grid. The fuel assemblies are arranged with a spacing between them for allowing insertion of a cross-shaped control rod between the nuclear fuel assemblies, and a spacing with the cell walls. Controlling these spacings between the fuel assemblies is important for the nuclear reaction in normal operation and for making sure to allow insertion of the control rod for slowing down the nuclear reaction.

A nuclear fuel assembly for boiling Water Reactor (BWR) comprises a bundle of longitudinally extending fuel rods arranged in a lattice, at least one tubular water channel or water rod replacing some fuel rods in the bundle, a tubular fuel channel encasing the bundle of fuel rods, and a base and a head at the longitudinal ends of the fuel assembly.

US 4 851 187 discloses a nuclear fuel assembly comprising a fuel channel fastener comprising a support adapted for fitting over a corner of the fuel channel and two springs extending along the support. The support is screwed to an upper tie plate of the nuclear fuel assembly with a bolt extending longitudinally for connecting the fuel channel to the upper tie plate. Each spring has an upper end screwed to the support with a transverse screw and a lower end slidable in a slot of the support. The fuel channel fastener combines the functions of fastening the fuel channel to the upper tie plate and spacing the fuel channel from an adjacent nuclear fuel assembly.

Such a fuel channel fastener which has to be geometrically controlled and to withstand high forces is obtained at high cost. Furthermore, there is a risk of bending of the fuel channel fastener during handling of the nuclear fuel assembly using a handle connected to the upper tie plate.

An object of the invention is therefore to provide a nuclear fuel assembly for a boiling water reactor in which spacing can be obtained easily and reliably at low cost.

To this end, the invention proposes a nuclear fuel assembly for boiling water reactor comprising a base, a head, a bundle of fuel rods extending longitudinally between the base and the head, a tubular fuel channel encasing the bundle of fuel rods, and at least one fuel channel spacer for transversely spacing the fuel assembly from an adjacent element, wherein the or each fuel channel spacer comprises a support having at least one plate and at least one corresponding leaf spring supported by the corresponding plate, the or each plate being fixed to a corresponding sidewall of the fuel channel.

According to specific embodiments, the nuclear fuel assembly may comprise one or several of the following features:
- the or each plate is welded to a sidewall;
- the or each plate is riveted to a sidewall of the fuel channel;
- the or each plate is screwed to a sidewall;
- the or each plate is fixed to the sidewall by a single plate-rivet and/or screw.
- each spring is snap-fitted in the plate;
- the spring has two end portions each slidably received in a respective slot provided in the plate;
- the support comprises two plates at right angle, the support is fitted onto a corner at the intersection of two sidewalls, each plate being fixed to a respective sidewall;
- the two plates are one piece; and
- the support ends before the upper end of the fuel channel.

The invention and its advantages will be better understood on reading the following description given solely by way of example and with reference to the following drawings:
- Figure 1 is a schematic side elevation view illustrating a nuclear fuel assembly for a boiling water reactor according to the invention;
- Figure 2 is a schematic top view of the nuclear fuel assembly of Figure 1 illustrating spacer and stops;
- Figure 3 is a side view of the upper end of the fuel assembly of Figure 1 illustrating a spacer and a stop;
- Figure 4 is a cross-section view of the spacer along IV-IV on Figure 3;
- Figure 5 is a cross-section view of the spacer and the stop along V-V on Figure 3;
   and
- Figure 6 - 8 are views similar to that of Figure 3 illustrating variants of the invention.

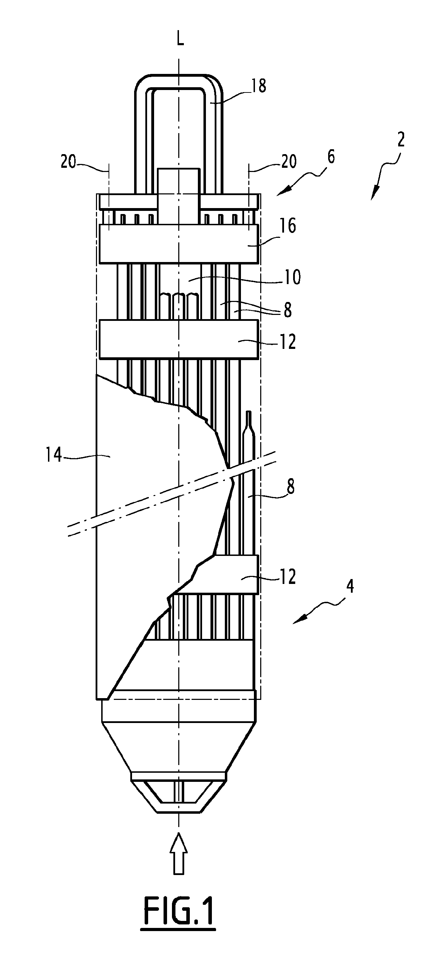

Figures 1 shows a nuclear fuel assembly 2 for a boiling water reactor (BWR). This fuel assembly 2 extends along a longitudinal direction L.

Such a fuel assembly is intended to be placed with the longitudinal direction L oriented vertically in a core of a nuclear reactor where coolant flows upwardly during operation. In the following, the terms "lower" and "upper" refer to the position of the fuel assembly 2 in the reactor.

The fuel assembly 2 comprises :
- a base 4,
- a head 6,
- a bundle of nuclear fuel rods 8 extending longitudinally between the base 4 and the head 6,
- a tubular water channel 10 replacing at least one fuel rod in the bundle and connecting the base 4 to the head 6,
- a plurality of spacer grids 12 spaced apart along the longitudinal direction L and maintaining longitudinally and transversely the fuel rods 8; and
- a tubular fuel channel 14 encasing the bundle of fuel rods 8 and fitted to the base 4 and the head 6.

Only a portion of the fuel channel 14 is shown on Figure 1.

Each fuel rod 8 comprises a tubular cladding filled with stacked nuclear fuel pellets and closed at its ends by end plugs. The bundle of fuel rods 8 includes full-length fuel rods and part-length fuel rods. The part-length fuel rods are shorter than the full-length fuel rods.

The head 6 comprises an upper tie plate 16 and a handle 18 rigidly connected to the upper tie plate 16 for handling the fuel assembly 2. The upper tie plate 16 is connected to the fuel channel 14 with bolts 20 extending in the longitudinal direction L. The bolts 20 are schematically illustrated by dash-dotted lines on Figure 1.

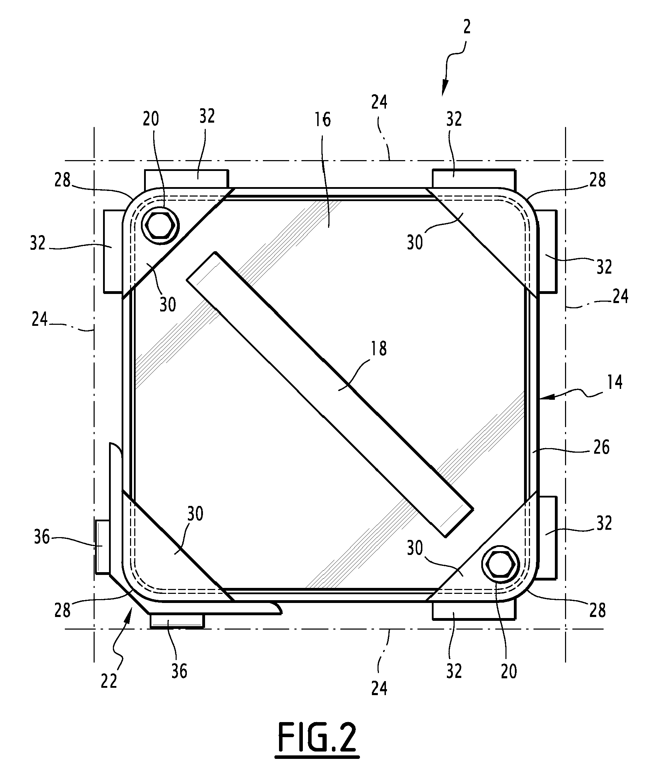

As illustrated on Figure 2, the fuel assembly 2 comprises fuel channel spacers 22 placed at the upper end of the fuel channel 14 for transversely spacing the fuel channel 14 from adjacent element, i.e. nuclear fuel assemblies 2 and/or walls of the reactor upper core grid as illustrated by a dash-doted line 24.

The fuel channel 14 has a quadrangular cross-section and comprises four sidewalls 26 intersecting at corners 28. The fuel channel 14 comprises triangular reinforcement angle brackets 30 provided at the upper end, each angle brackets 30 extending transversely between two adjacent sidewalls 26.

The handle 18 extends diagonally between two corners 28 and the bolts 20 extend in the longitudinal direction L through the angle brackets 30 provided at said two corners 28.

The fuel assembly 2 comprises one spacer 22 fitted on one of the two other diagonally opposed corners 28. In alternative the fuel assembly 2 may comprise two spacers 22, each fitted on one of the two other diagonally opposed corners 28. If needed, the fuel assembly 2 may comprise one spacer 22 at each corner 28.

The fuel assembly 2 further comprises stops 32 fixed to the sidewalls 26. The fuel assembly 2 comprises one stop 32 on each sidewall 26 adjacent a corner 28 not occupied by a spacer 22.

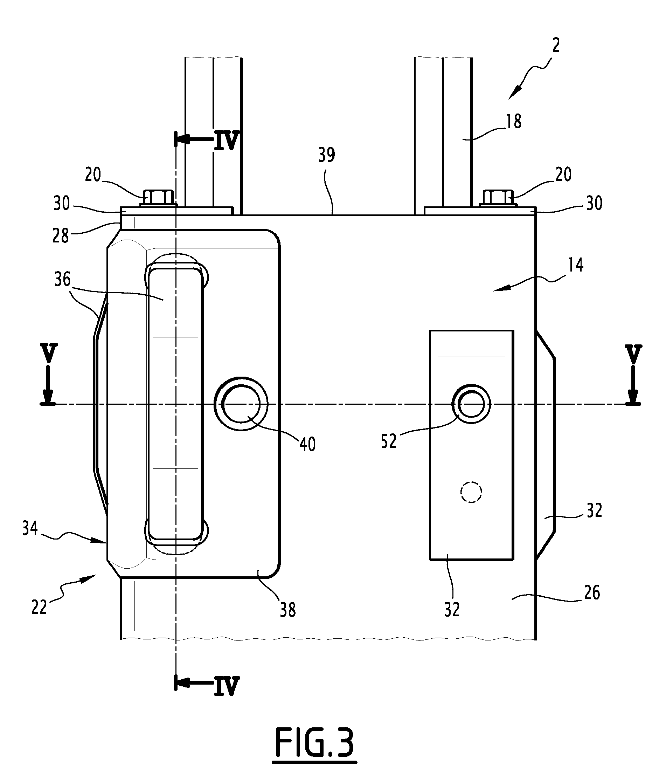

The spacer 22 will be described in greater detail with reference to Figures 3 - 5. The spacer 22 comprises a support 34 and two separate leaf springs 36.

The support 34 has the shape of a corner piece and comprises two plates 38 at right angles imparting a V-shaped cross-section to the support 34.

As shown on Figure 3, each plate 38 ends upwardly below or at the height of the upper edge 39 of the fuel channel 14. The plates 38 do not protrude upwardly from the upper edge 39.

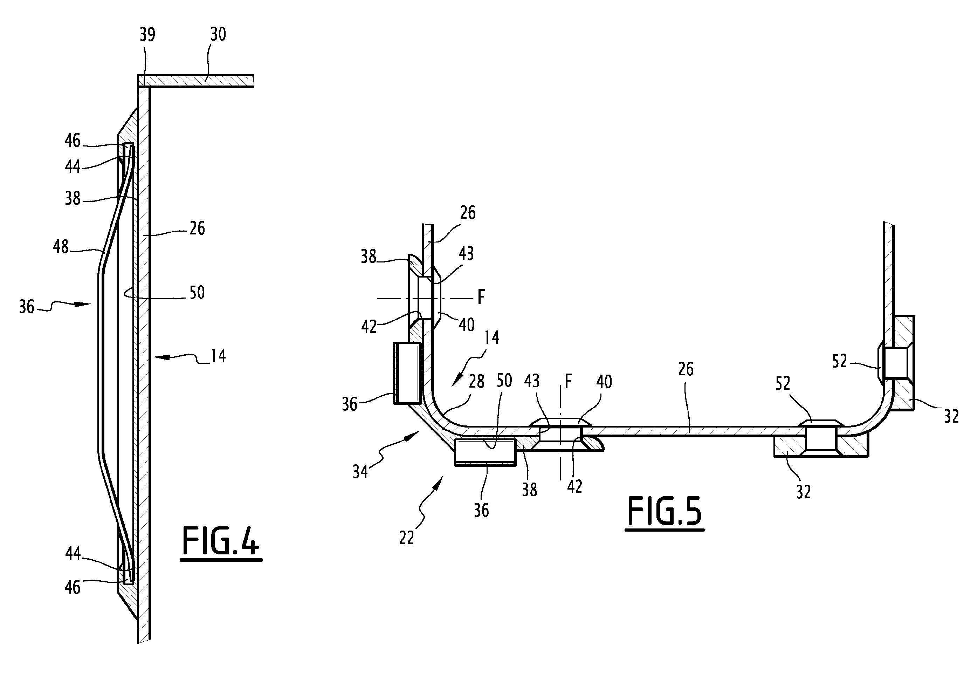

As shown on Figure 5, each plate 38 is placed on the outer face of a sidewall 26 and fixed to the sidewall 26 by riveting. Each plate 38 is riveted with one single plate-rivet 40 extending through a fixing hole 42, 43 in the plate 38 and the corresponding sidewall 26 in a fixing direction F perpendicular to the plate 38 and the longitudinal direction L. Alternatively, each plate 38 may be fixed with more than one plate-rivet 40, e.g. two plate-rivets 40.

The support 34 is single piece and the two plates 38 are made integrally in one piece. The support 34 is preferably made of a piece of metal.

Each spring 36 is elongated longitudinally and extends along a respective plate 38. Each spring 36 is individually supported by the corresponding plate 38.

As shown on Figure 4, each spring 36 has two end portions 44 snap-fitted into slots 46 formed in the plate 38 and an intermediate portion 48 bulging away from the plate 38. Each end portion 44 is slidable longitudinally in the corresponding slot 46.

Each plate 38 comprises on its outer face a groove 50 extending longitudinally. Each slot 46 extends the groove 50 longitudinally within the thickness of the plate 38. Each slot 46 is blind.

The spring 36 and the slots 46 are configured for allowing the spring 36 to be elastically deformed by biasing the intermediate portion 48 towards the plate 38, whereby the end portions 44 slide in the slots 46 away one from the other.

As shown on Figure 2, the fuel assembly 2 comprises two stops 32 fixed to the sidewalls 26 delimiting the corner 28 onto which the spacer 22 is fitted. Each stop 32 is fixed to a sidewall 26 at a distance from the spacer 22.

As shown on Figures 3 and 5, each stop 32 is riveted to the corresponding sidewall 26 with a single stop-rivet 52 extending through the stop 32 and the sidewall 26. Alternatively, each stop 32 is riveted with more than one stop-rivet 52, e.g. two stop-rivets 52.

Each stop 32 is rigid and ensures a minimal spacing with a wall facing the sidewall 26 and thus prevents overstress of the spring 36 provided on the same sidewall 26.

The plates 38 of the support 34 are fixed exclusively to sidewalls 26 of the fuel channel 14 without the support 34 being fixed to an angle bracket 30. The support 34 is fixed to the fuel channel 14 separately from the fixing of the fuel channel 14 to the upper tie plate 16. It is thus prevented from being bent, damaged and/or displaced due to handling of the fuel assembly 2. The support 34 can be manufactured easily at low cost.

The support 34 is fitted onto a corner 28 of the fuel channel 14 and rigidly fixed with two plate-rivets 40 extending each in one of two perpendicular directions. This ensures a reliable fixing. The support 34 shaped as a corner piece further reinforces the fuel channel 14 at the corresponding corner 28.

Fixing the support 34 by riveting allows providing the support 34 in a metal which is not compatible with the metal of the fuel channel 14 in terms of welding. The metal used for the support 34 can thus be a metal of lower cost than that of the fuel channel 14. The fuel channel 14 is usually made of zirconium alloy whereas the metal of the support 34 may be for instance stainless steel.

Riveting allows fixing the support 34 simply and economically. Riveting merely requires providing riveting holes 43 in the sidewalls 26 of the fuel channel 14.

In an alternative embodiment, the support 34 may be screwed to sidewalls 26 with at least one screw extending through each plate 38 and the corresponding sidewall 26, transversely to said plate 38 and to the longitudinal direction L. Similarly, each stop 32 may be screwed to the sidewall 26 with a screw-passing-through hole in the stop 32 and the corresponding sidewall 26.

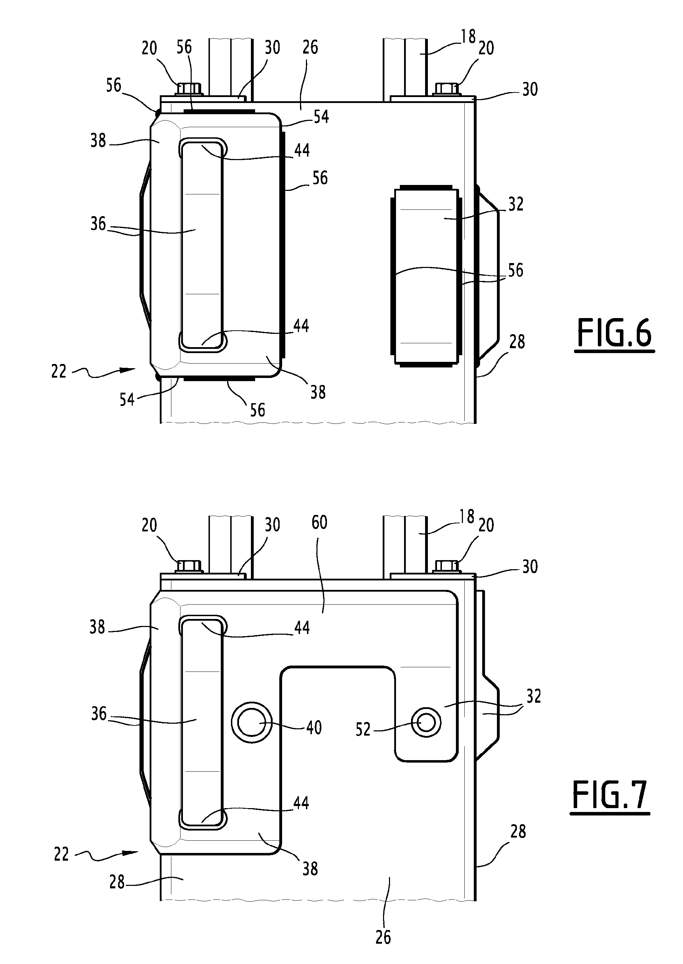

The embodiment of Figure 6 differs from that of Figure 2 - 5 by the means for fixing the plates 38 to the sidewalls 26. More specifically, each plate 38 is welded onto a sidewall 26 of the fuel channel 14.

Each plate 38 is welded to the sidewall 26 along edges 54 of the plate 38. In the illustrated embodiment, the weld joints 56 extend partially along each welded edge 54 extends partially along said edge. The weld joint 56 is continuous. Alternatively, it may be discontinuous.

As illustrated, the stops 32 are also welded to the sidewalls 26 with weld joints 56 extending partially along the edges of the stops 32.

Fixing the support 34 by welding is reliable and economical and ensures an efficient reinforcement of the fuel channel 14 by the support 34. The support 34 is made in this case of a metal that is compatible with the metal of the fuel channel 14 in terms of welding. The fuel channel 14 is usually made of zirconium alloy and the support 34 is for example in zirconium or in titanium alloy.

The embodiment of Figure 7 differs from that of Figures 2 - 6 in that the stops 32 are formed in the support 34 and made one piece with the plate 38. The support 34 comprises two arms 60 each extending from a plate 38 and each stop 32 is formed at the free end of an arm 60. Only one arm 60 is shown on Figure 7.

The stops 32 integral with the support 34 allow fixing of the spacer 22 in one operation. The spacer 22 further reinforces the fuel channel 14. The fixing of the support 34 is operated by riveting as illustrated on Figure 7 and alternatively by screwing or welding as previously described.

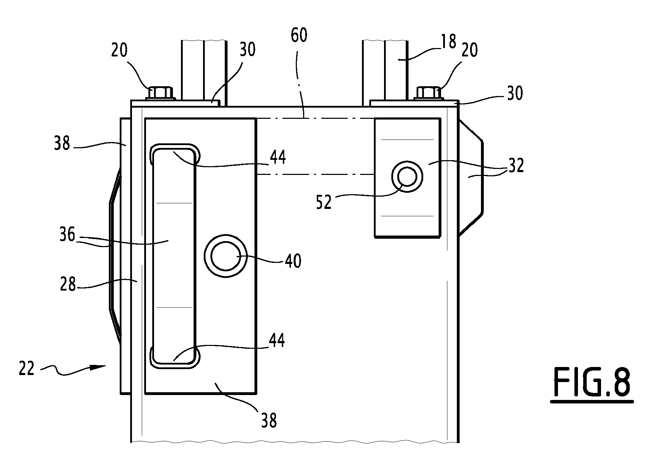

The embodiment of Figure 8 differs from that of Figures 2 - 7 in that a spacer with the shape of a corner piece fitted on the corner 28 is replaced by two separate individual flat spacers 22 each fixed to one respective sidewall 26 adjacent a corner 28 at the intersection of said sidewalls 26.

Each spacer 22 comprises a support 34 formed of a single plate 38 and a spring 36 having end portions 44 snap-fitted into slots 46 formed in the plate 38. Each fuel spacer 22 of Figure 8 corresponds to half a fuel channel spacer 22 of Figure 2 - 5.

The support 34 of each spacer 22 is fixed to the corresponding sidewall 26 by riveting, screwing and/or welding as described above.

A stop 32 separated from the spacer 22 is provided on each sidewall 26. Alternatively, each stop 32 is made in one piece with the plate 38 and formed at the end of an arm 60 extending from the plate 38 as illustrated in dotted lines on said Figure 8.

## Claims

1. Nuclear fuel assembly (2) for boiling water reactor comprising a base (4), a head (6), a bundle of fuel rods (8) extending longitudinally between the base (4) and the head (6), a tubular fuel channel (14) encasing the bundle of fuel rods (8), and at least one fuel channel spacer (22) for transversely spacing the fuel assembly (2) from an adjacent element, wherein the or each fuel channel spacer (22) comprises a support (34) having at least one plate (38) and at least one corresponding leaf spring (36) supported by the corresponding plate (38), the or each plate (38) being fixed to a corresponding sidewall (26) of the fuel channel (14).

2. Nuclear fuel assembly according to claim 1, wherein the or each plate (38) is welded to a sidewall (26).

3. Nuclear fuel assembly according to claim 1 or 2, wherein the or each plate (38) is riveted to a sidewall (26) of the fuel channel (14).

4. Nuclear fuel assembly according to claim 1 or 2, wherein the or each plate (38) is screwed to a sidewall (26).

5. Nuclear fuel assembly according to claim 3 or 4, wherein the or each plate (38) is fixed to the sidewall (26) by a single plate-rivet (40) and/or screw.

6. Nuclear fuel assembly according to any preceding claim, wherein each spring (36) is snap-fitted in the plate (38).

7. Nuclear fuel assembly according to any preceding claim, wherein the spring has two end portions (44) each slidably received in a respective slot (46) provided in the plate (38).

8. Nuclear fuel assembly according to any preceding claim, wherein the support (34) comprises two plates (38) at right angle, the support (34) is fitted onto a corner (28) at the intersection of two sidewalls (26), each plate (38) being fixed to a respective sidewall (26).

9. Nuclear fuel assembly according to claim 8, wherein the two plates (38) are one piece.

10. Nuclear fuel assembly according to any preceding claim, wherein the support (34) ends before the upper end of the fuel channel (14).
